Europäisches Patentamt

European Patent Office

Office européen des brevets

(11) Publication number: **0 216 800**
**B1**

## (12) EUROPEAN PATENT SPECIFICATION

(45) Date of publication of patent specification: **18.07.90**

(21) Application number: **86901234.4**

(22) Date of filing: **31.01.86**

(86) International application number:
**PCT/US86/00209**

(87) International publication number:
**WO 86/04545 14.08.86 Gazette 86/18**

(51) Int. Cl.⁵: **B 31 B 23/36, B 31 B 23/84, B 31 B 23/90, B 65 H 45/09**

(54) **APPARATUS FOR PRODUCING FLEXIBLE CONTAINERS.**

(30) Priority: **01.02.85 US 697542**

(43) Date of publication of application:
**08.04.87 Bulletin 87/15**

(45) Publication of the grant of the patent:
**18.07.90 Bulletin 90/29**

(84) Designated Contracting States:
**BE CH DE FR GB LI SE**

(56) References cited:
| | |
|---|---|
| EP-A-0 041 924 | US-A-3 351 963 |
| DE-A-2 160 459 | US-A-3 486 424 |
| DE-A-2 352 528 | US-A-3 868 891 |
| GB-A-1 013 942 | US-A-3 873 082 |
| US-A- 523 499 | US-A-4 050 361 |
| US-A-1 499 254 | US-A-4 055 032 |
| US-A-2 619 057 | US-A-4 166 412 |
| US-A-3 069 303 | |

(73) Proprietor: **BAXTER INTERNATIONAL INC. (a Delaware corporation)**
**One Baxter Parkway**
**Deerfield Illinois 60015 (US)**

(72) Inventor: **POSEY, John, L.**
**3719 Hillcrest Street**
**McHenry, IL 60050 (US)**

(74) Representative: **MacGregor, Gordon et al**
**ERIC POTTER & CLARKSON St. Mary's Court St. Mary's Gate**
**Nottingham, NG1 1LE (GB)**

## Description

Background of the Invention

This invention relates to an apparatus for producing flexible containers from a web of film. In particular, the present invention relates to a former for a form, fill and seal packaging machine.

Form, fill and seal packaging machines are utilized to produce, from a web of flexible film, a flexible container containing material to be dispensed. Form, fill and seal packaging machines are utilized to seal paramaceuticals, dairy products, wine, food stuffs, cosmetics, nutritional products, and other products in flexible containers. The form, fill and seal packaging machine provides an apparatus for packaging these products in an expedient manner.

Typically, a former provides means for folding, or aligning, opposite sides of the web of substantially flat film so that the film may be created into flexible containers. To this end, the former typically forms the film into a tubular shape. This tubular shape is usually effectuated by folding longitudinally the substantially flat web of film.

In some types of packaging arts including, inter alia, pharmaceutical, food products, nutritional products, and dairy products, it is desirable to make flexible containers that include means for accessing the container (hereinafter "fitments"). As used herein, the term fitments includes, without limitation, valves, ports, port enclosure assemblies, and other means for accessing a container. Fitments provide means for establishing fluid communication between a container and the outside environment. An example of a container utilizing a fitment is the VIAFLEX® flexible container for parenteral solutions produced by Travenol Laboratories, Inc. of Deerfield, Illinois.

Typically, due to the construction of the prior art formers and form, fill and seal apparatus, if fitments are to be attached to the web of film, the web of film is first folded into the tubular shape and then the fitments are attached. Because the fitments are attached after the web of film is folded, this produces a slower and more difficult process of attaching fitments compared to if the fitments were attached when the film was substantially flat, i.e. not folded.

In typical pharmaceutical and nutritional packages it is desirable to orient the fitment at one end of the flexible container. If the fitment is attached to the film before the film is folded this necessitates that the fitment is located to the center of the film. Thus, if the film is formed after the fitment is attached, it is necessary that the former is able to "handle" film with a fitment located in the center of the web of film.

When the fitment is located at an end of the flexible container it is desirable that the fitment has a substantially curved base that conforms to the end of the flexible container. This is usually achieved by heating the base of the fitment when the fitment is attached to the web of film. This presents a further problem in attaching the fitment to the web of film prior to the film being folded in a tubular shape. If the fitment is attached to a substantially flat web of film it may not be desirable to curve the base prior to the film being formed into a tubular shape; the curved base may interfere with the flow of the film through the form, fill and seal apparatus.

In certain arts, specifically pharmaceuticals and nutrition, it is necessary to package the products in a sterile, aseptic environment. Accordingly, it is important that the parts of the form, fill and seal packaging machine do not contaminate the product or film. Therefore, it is important that the former is not a harbour for bacteria and other contaminates.

EP—A—0041924 discloses a machine for providing fitments on a web, which is made up into bags.

DE—A—2352528 discloses an apparatus for producing flexible containers from a substantially flat web of film, the apparatus comprising folding means including support means, a substantially V-shaped member secured to the support means for folding the web about the V-shaped member into a channel shape as the web is advanced past the folding means in a given direction and guide means for receiving the channel-shaped web.

The present invention is characterised in that the apparatus is adapted for folding a web provided at longitudinally spaced intervals with centrally positioned fitments and includes an elongated member secured to the V-shaped member and extending from adjacent the apex thereof in said given direction to assist in maintaining the channel shape of the web, said guide means having dependent means arranged to center the fitments and thereby maintain the web with aligned opposite longitudinal edges, and a base former downstream of the elongate member for shaping a base of each fitment.

Preferbaly, the V-shaped member includes two coplanar legs located at angles of approximately 60° to about 75° to each other. Preferably, the V-shaped member extends from the elongate member at an angle of approximately 120° to about 145°.

The elongate member may include a heater for heating the base of the attached fitment. The former may include a support member including two legs and a cross bar. The guide means may comprise two rods extending from the cross bar.

An advantage of the present invention is that it provides a form, fill and seal packaging machine wherein the fitments may be attached to a web of substantially flat film before the film is formed into a tubular shape.

Additional features and advantages are described in, and will be apparent from, the detailed description of the presently preferred embodiments and from the drawings.

## Brief description of the drawings

Figure 1 illustrates a schematic view of the form, fill and seal packaging apparatus of this invention.

Figure 2 illustrates a side elevational view of a preferred embodiment of the former of this invention.

Figure 3 illustrates a front elevational view of the former of Figure 1 taken along lines 3—3.

Figure 4 illustrates a top elevational view of the former of Figure 1 taken along lines 4—4.

Figure 5 illustrates a cross-sectional portion of the former of Figure 1 taken along lines 5—5 of Figure 4.

## Detailed description of the presently preferred embodiments

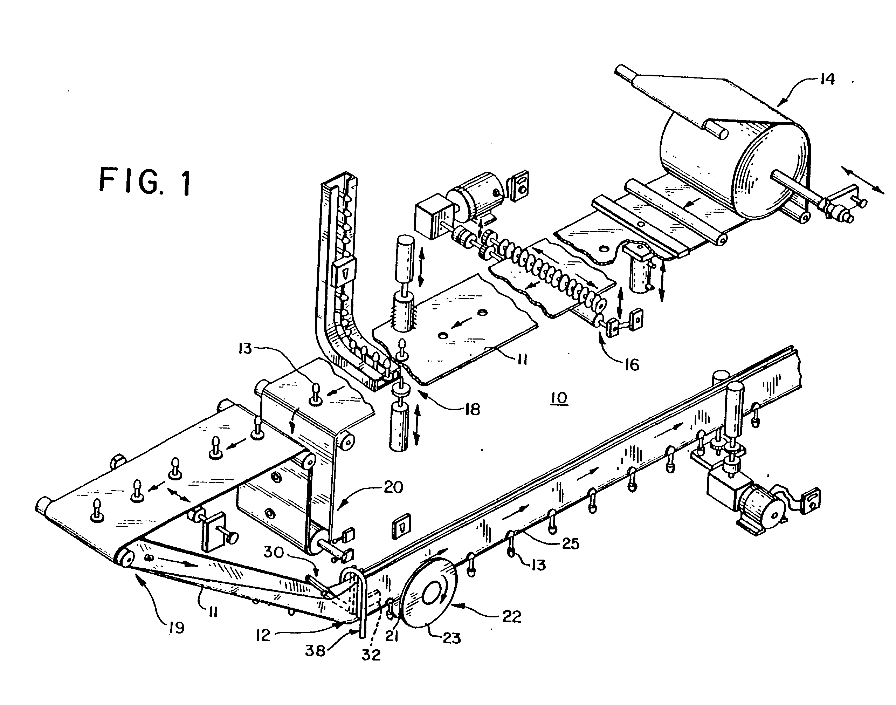

Referring to Figure 1, the form, fill and seal packaging apparatus 10 of the present invention is illustrated. The form, fill and seal packaging apparatus 10 is designed to produce from a web of film 11 a flexible container containing a solid or fluid to be extracted.

Briefly, the form, fill and seal apparatus 10 includes a supply of film 14, that is fed to an indexing apparatus 16. The form, fill and seal packaging apparatus 10 further includes a fitment attaching apparatus 18 that attaches a fitment 13 to the web of substantially flat film 11. After a fitment 13 has been attached to the web of film 11 the film advances to an accumulation station 20 that promotes the transition from intermittent to continuous flow of the film through the form, fill and seal apparatus 10. From the accumulation station 20 the web of film 11, with attached fitments 13, then moves to a tracking roller 19. From the tracking roller 19 the film 11 moves to the former 12. The web of film 11 then passes through the former 12 and a fitment post forming device 22. After passing through the fitment post forming device 22 the web of film 11, with attached fitments 13, then moves to a sealer (not shown) where end seals are effectuated in the web of film 11. The film 11 is then filled at a fill station (not shown) with a material to be packaged, sealed and cut into individual flexible containers.

The sealer and fill station may be any sealer and fill station known in the art. Likewise, the treatment attaching apparatus 18 may be any fitment attaching apparatus known in the art that attaches fitments to a flexible web of film.

The fitment post forming apparatus 22 functions to form the curved base 25 of the fitment 13 after the elongated member 32, and specifically the heater means, softens the base 25. To this end, two rollers 21 and 23 cool the base 25 so that it retains its formed shape. The two rollers 21 and 23 are driven so that they rotate in the direction of the flow of film 11. Preferably the rollers 21 and 23 are constructed from aluminum or other material with good heat transfer properties. The rollers 21 and 23 are preferably cooled with chilled water. The rollers 21 and 23 may be cooled by a rotary union.

The distance from the tracking roller 19 to the former 12 is important. It has been found that with a 10 inch (25.4 cm) wide web of film 11, the distance from the former 12 to the tracking roller 19 is preferably 20 inches (50.8 cm). If the distance between the tracking roller 19 and former 12 is too great or small you get unstable tracking. The angle of the tracking roller 19 and former 12 is also important. It has been found that with a 10 inch (25.4 cm) wide web of film 11 preferably the angle is approximately 35°.

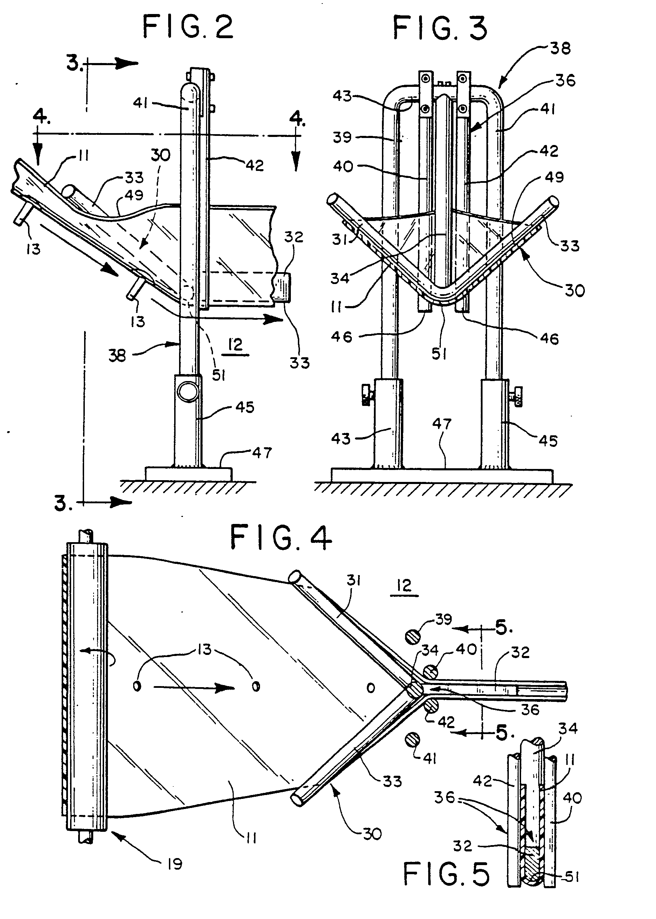

Referring to Figures 2—5, the former 12 of the present invention is illustrated. The former 12 is constructed so that a web of film 11 with attached fitments 13 may be formed into a channel shape that can be filled and sealed. The former 12 allows fitments 13 to be attached either to the inside or outside of the web of film 11 before the film is formed into a channel shape.

The former 12 includes a V-shaped member 30 and an elongate member 32. The V-shaped member 30 functions to guide the film 11 with attached fitments 13 into a channel shape. The V-shaped member 30 includes two coplanar legs 31 and 33. Preferably, the coplanar legs 31 and 33 are rod-like members. The length of the coplanar legs 31 and 33 is a function of the width of the web of film 11. Preferably, the coplanar legs 31 and 33 extend from each other at an angle of approximately 60° to about 75°. Preferably, the V-shaped member extends from the elongate member 32 at an angle of 120° to about 145°.

Preferably, the elongate member 32 is rectangularly shaped and extends from an end of the V-shaped member 30. It should be noted that as long as the bottom 33 of the elongate member 32 is flat the elongate member may have any shape. The elongate member 32 also helps to maintain the film 11 in a channel shape. The elongate oember 32 may include heating means (not illustrated) for heating the base of the fitment 13 so that it takes on a substantially curved shape. The heating means may comprise any tubular heater known in the art. A tubular heater made by Watlow has been found to function satisfactorily as the heating means.

In the embodiment illustrated in Figures 3—5, the V-shaped member 30 and elongate member 32 are supported by a center rod 34. Preferably, the V-shaped member 30 extends from the center rod 34 at an angle of approximately 40° to about 50°. The center rod 34 in turn is attached to and supported by a supporting member 38. The supporting member 38 includes two legs 39 and 41, and a cross bar 43. As illustrated, the legs 39 and 41 may be secured to adjustable members 43 and 45. The adjustable members 43 and 45 are secured to a base 47 and allow the user to adjust the height of the former 12. It should be noted that the legs 39 and 41 could be welded directly to the base 47.

The former 12 also includes an inverted U-shaped member 36. As described in more detail below, the U-shaped member 36 helps to maintain the film 11 in a channel shape after it has passed by the V-shaped member 30. The inverted U-shaped member 36 helps to align the fitments 13 as the film 11 is folded into a channel shape. As illustrated in the embodiment set forth in Figures 2 and 5, the inverted U-shaped member 36 comprises two parallel rods 40 and 42 that extend from the support member 38. The portion 46 of the parallel rods 40 and 42 that extends below the elongate member 32 functions to center the fitments 13 as the film 11 with attached fitments passes through the form, fill and seal apparatus 10. It should be noted that the supporting member 38 may be constructed so that it functions as the U-shaped member 36.

As illustrated, in use, a first side 49 of the web of film 11 contacts the V-shaped member 30 and a second side 51 of the web of film 11 contacts the inverted U-shaped member 36. Due to the shape of the V-shaped member 30 and the inverted U-shaped member 36 the web of film 11 with attached fitments 13 may be shaped into a tubular shape and then subsequently sealed, filled and sealed to create a flexible container. Furthermore, the construction of the former allows the fitments 13 to be attached to the center of the web of film 11.

Preferably, the V-shaped member 30, the elongate member 32, and the center member 34 are integral. By being integral they do not provide a harbour for bacteria and other contaminants so that the former 12 may be used in an aseptic form, fill and seal packaging machine 10. Preferably, the V-shaped member 30, center member 34, and elongate member 32 are constructed from stainless steel or other metals, plastic, nylon, polyvinyl chloride, or any other material, especially a material that may be coated with, for example, Teflon. Type 316 stainless steel has been found to work satisfactorily. Preferably the U-shaped member 36 is constructed from stainless steel or other metals, plastic, nylon, polyvinyl chloride, or any other material, especially a material that may be coated with, for example, Teflon. Type 316 stainless steel has been found to work satisfactorily. Preferably the support member 38 is constructed from stainless steel of other metals, plastic, nylon, polyvinyl chloride, or any other material, especially a material that may be coated with, for example, Teflon. Type 316 stainless steel has been found to work satisfactorily. "Teflon" is a registered trade mark.

It is believed that the former 12 of this invention may be used with most films known in the art to create flexible containers in a form, fill and seal apparatus. Likewise, the former 12 may also be used with most fitments for flexible containers known in the art.

## Claims

1. Apparatus for use in producing flexible containers from a substantially flat web of film (11), the apparatus comprising folding means including support means (38) and a substantially V-shaped member (30) secured to the support means for folding the web (11) about the V-shaped member into a channel shape as the web is advanced past the folding means in a given direction and guide means (40, 42) for receiving the channel-shaped web, characterised in that the apparatus is adapted for folding a web (11) provided at longitudinally spaced intervals with centrally positioned fitments (13) and includes an elongate member (32) secured to the V-shaped member and extending from adjacent the apex thereof in said given direction to assist in maintaining the channel shape of the web, said guide means (40, 42) having dependent means (46) arranged to center the fitments and thereby maintain the web with aligned opposite longitudinal edges, and a base former (22) downstream of the elongate member (30) for shaping a base (25) of each fitment (13).

2. Apparatus according to Claim 1 wherein said means for maintaining the web with aligned opposite longitudinal edges comprises two spaced parallel members (40, 42) extending from the support means (38) and adjacent and downstream of the V-shaped member for engaging the fitments (13) therebetween, whereby the web is folded substantially along the fitments.

3. Apparatus according to Claim 1 or 2, wherein the base former (12) forms the base (25) of each fitment with a substantially curved shape.

4. Apparatus according to Claim 1, 2 or 3, wherein the base former (12) comprises a pair of rollers (21, 23) which are rotated so that the peripheral surface of ech roller adjacent the web moves in said given direction.

5. Apparatus according to any preceding claim, wherein the elongate member (32) includes means for heating the fitments to facilitate forming of the fitments.

6. Apparatus according to Claim 5, wherein the base former (22) includes means for cooling the heated fitments.

7. Apparatus according to Claim 6, wherein the cooling means comprises rollers (21, 23) which are cooled by chilled fluid.

## Patentansprüche

1. Vorrichtung zur Verwendung bei der Herstellung flexibler Behälter aus einer im wesentlichen flachen Folienbahn (11), umfassend eine Falteinrichtung mit einer Halterung (38) und einem im wesentlichen V-förmigen Teil (30), das an der Halterung befestigt ist, um die Bahn (11) um das V-förmige Teil in Kanalform zu falten, während die Bahn in einer vorbestimmten Richtung an der Falteinrichtung vorbeibewegt wird, sowie eine Führungseinrichtung (40, 42), die die kanalförmige Bahn aufnimmt, dadurch gekennzeichnet, daß die Vorrichtung zum Falten einer Bahn (11) ausgelegt ist, die in Längsrichtung beabstandete, mittig angeordnete Anschlußeinheiten (13) aufweist, und ein langes Teil (32) hat, das am V-förmige Teil befestigt ist und sich von nahe dem Scheitelpunkt desselben in der vorbestimmten Richtung erstreckt und zur Aufrecherhaltung der Kanalform der Bahn beiträgt, wobei die Führungseinrichtung (40, 42) nach unten verlaufende Elemente (46) aufweist, die die Anschlußeinheiten zentrieren und dadurch die Bahn mit ausgerichteten gegenüberliegenden Längsrändern halten, und die Vorrichtung eine Basisformeinrichtung (22) abstrom des langen Teils (30) zum Formen einer Basis (25) jeder Anschlußeinheit (13) aufweist.

2. Vorrichtung nach Anspruch 1, wobei die Einrichtung, die die Bahn mit ausgerichteten gegenüberliegenden Längsrändern hält, zwei beabstandete parallele Elemente (40, 42) aufweist, die sich von der Halterung (38) sowie dem V-förmigen Teil benachbart und abstrom davon erstrecken und die Anschlußeinheiten (13) zwischen sich ergreifen, wodurch die Bahn im wesentlichen entlang den Anschlußeinheiten gefalter wird.

3. Vorrichtung nach Anspruch 1 oder 2, wobei die Basisformeinrichtung (22) die Basis (25) jeder Anschlußeinheit im wesentlichen gewölbt formt.

4. Vorrichtung nach Anspruch 1, 2 oder 3, wobei die Basisformeinrichtung (22) ein Paar von Rollen (21, 23) aufweist, die so umlaufen, daß die Umfangsfläche jeder Rolle angrenzend an die Bahn sich in der vorbestimmten Richtung bewegt.

5. Vorrichtung nach einem der vorhergehenden Ansprüche, wobei das lange Teil (32) eine Einrichtung aufweist, die die Anschlußeinheiten erwärmt, um das Formen derselben zu erleichtern.

6. Vorrichtung nach Anspruch 5, wobei die Basisformeinrichtung (22) eine Einrichtung zum Kühlen der erwärmten Anschlußeinheiten aufweist.

7. Vorrichtung nach Anspruch 6, wobei die Kühleinrichtung Rollen (21, 23) aufweist, die durch gekühltes Fluid gekühlt werden.

**Revendications**

1. Dispositif utilisable dans la fabrications de récipients souples à partir d'une bande de film sensiblement plane (11), le dispositif comprenant des moyens de pliage qui comportent un support (38) et une pièce sensiblement en forme de V (30) fixée au support pour plier la bande (11) autour de la pièce en V et lui donner une configuration en canal lorsque la bande avance devant les moyens de pliage dans une direction donnée, et des moyens du guidage (40, 42) pour recevoir la bande à configuration en canal, caractérisé en ce que le dispositif est conçu pour plier une bande (11) comportant de raccords (13) placés centralement, à intervalles longitudinalement espacés, et il comprend une pièce allongée (32) fixée à la pièce en V et s'étendant à partir de son sommet adjacent, dans ladite direction donnée, pour aider au maintien de la configuration en canal de la bande, lesidts moyens de guidage (40, 42) comportant des moyens dirigés vers le bas (46) disopsés pour centrer les raccords et maintenir ainsi la bande avec les bords longitudinaux opposés alignés, et un dispositif de formage de base (22) placé en aval de la pièce allongée (30), pour le formage d'une base (25) de chaque raccord (13).

2. Dispositif suivant la revendication 1, dans lequel lesdits moyens de maintien de la bande avec les bords longitudinaux opposés alignés comprennent deux pièces parallèles espacées (40, 42) s'étendant à partir du support (38), près et en aval de la pièce en V, pour recevoir entre elles les raccords (13), de sorte que la bande est pliée sensiblement le long des raccords.

3. Dispositif suivant la revendication 1 ou 2, dans lequel le dispositif de formage de base (22) forme la base (25) de chaque raccord à une configuration sensiblement courbe.

4. Dispositif suivant la revendication 1, 2 ou 3, dans lequel le dispositif de formage de bas (22) comprend deux rouleaux (21, 23) qui tournent de sorte que la surface périphérique de chaque rouleau, adjacente à la bande, se déplace dans ladite direction donnée.

5. Dispositif suivant l'une quelconque des revendications précedentes, dans lequel la pièce allongée (32) comprend des moyens de chauffage des raccords, afin de faciliter le formage des raccords.

6. Dispositif suivant la revendication 5, dans lequel le dispositif de formage de base (22) comprend des moyens de refroidissement des raccords chauffés.

7. Dispositif suivant la revendication 6, dans lequel les moyens de refroidissement comprennent des rouleaux (21, 23) qui sont refroidis par un fluide froid.

FIG. 1

FIG. 2

FIG. 3

FIG. 4

FIG. 5